# EUROPÄISCHE PATENTSCHRIFT

(11) **EP 3 663 475 B1**
(45) Veröffentlichungstag und Bekanntmachung des Hinweises auf die Patenterteilung: **14.08.2024**
(21) Anmeldenummer: 19210086.5
(22) Anmeldetag: 19.11.2019
(51) Int. Cl.: E04B 1/78, E04B 2/86, E04B 5/32, E04B 1/76, E04B 1/16

(54) **VORRICHTUNG ZUR WÄRMEENTKOPPLUNG ZWISCHEN EINER BETONIERTEN GEBÄUDEWAND UND EINER GESCHOSSDECKE SOWIE HERSTELLVERFAHREN**
DEVICE FOR DECOUPLING HEAT BETWEEN A CONCRETE WALL OF A BUILDING AND A CEILING AND PRODUCTION METHOD
DISPOSITIF D'ISOLEMENT THERMIQUE ENTRE UN MUR DE BÂTIMENT BÉTONNÉ ET UN PLANCHER, AINSI QUE PROCÉDÉ DE FABRICATION

(30) Priorität: 04.12.2018 DE 102018130844
(43) Veröffentlichungstag der Anmeldung: 10.06.2020
(73) Patentinhaber: Schöck Bauteile GmbH, 76534 Baden-Baden (DE)
(72) Erfinder:
(74) Vertreter: LBP Lemcke, Brommer & Partner Patentanwälte mbB

(56) Entgegenhaltungen:
- CN-A- 105 507 481
- CN-U- 203 947 631
- DE-A1- 10 106 222
- DE-U1- 202004 020 656

## Beschreibung

Die vorliegende Erfindung betrifft ein Wärmedämmelement zur Wärmeentkopplung zwischen aus Beton zu erstellenden, tragenden Gebäudeteilen, nämlich einer vertikalen Gebäudewand und einer darüber- oder darunterliegenden Geschossdecke, wobei das Wärmedämmelement einen linienförmig zwischen den Gebäudeteilen zu verlegenden Grundkörper aufweist, der zumindest teilweise aus einem druckkraftübertragenden und wärmedämmenden Werkstoff, nämlich Leichtbeton, besteht und eine obere und eine untere Auflagefläche zum vertikalen Anschluss an die Gebäudeteile aufweist.

Im Hochbau werden tragende Gebäudeteile häufig aus mit einer Bewehrung versehenen Betonkonstruktionen erstellt. Aus energetischen Gründen werden solche Gebäudeteile in der Regel mit einer von außen angebrachten Wärmedämmung versehen. Insbesondere die Geschossdecke zwischen Tiefgeschoss, wie beispielsweise Keller oder Tiefgarage, und Erdgeschoss wird häufig auf der Tiefgeschossseite mit einer deckenseitig angebrachten Wärmedämmung ausgerüstet. Hierbei ergibt sich die Schwierigkeit, dass die tragenden Gebäudeteile, auf denen das Gebäude ruht, wie etwa Stützen und Außenwände, in lastabtragender Weise mit den darüber befindlichen Gebäudeteilen, insbesondere der Geschossdecke, verbunden sein müssen. Dies wird in der Regel dadurch erreicht, dass die Geschossdecke bei durchgehender Bewehrung monolithisch mit den tragenden Stützen und Außenwänden verbunden wird. Hierbei entstehen jedoch Wärmebrücken, die sich nur schlecht durch eine nachträglich von außen angebrachte Wärmedämmung beseitigen lassen.

In der Schrift EP 3 085 843 A1 ist ein Wärmedämmelement für eine betonierte Stütze beschrieben Es besitzt einen Grundkörper aus Leichtbeton und diesen durchdringende Bewehrungsstäbe. Zum Erstellen der Stütze soll das Wärmedämmelement in die für die Stütze vorbereitete Schalung eingesetzt und anschließend die Stütze von unten gegen das Wärmedämmelement betoniert werden. Hierzu ist im Wärmedämmelement eine mittige Verfüllöffnung vorgesehen, durch die Frischbeton in die Schalung eingefüllt und anschließen ein Rüttelgerät hindurchgeführt werden kann, um den Frischbeton in der Schalung zu verdichten. Das dort gezeigte Wärmedämmelement und das beschriebe Verfahren zur Herstellung einer Stütze sind jedoch für tragende Gebäudewände weniger geeignet.

Aus der Schrift DE 101 06 222 ist ein mauersteinförmiges Wandelement zur Wärmeentkopplung zwischen Wandteilen und Boden- oder Deckenteilen beschrieben. Das Wärmedämmelement besitzt eine druckfeste Tragstruktur mit in den Zwischenräumen angeordneten Isolierelementen. Die Tragstruktur kann beispielsweise aus einem Leichtbeton bestehen. Ein solches Wärmedämmelement dient zur Wärmedämmung gemauerter Außenwände, indem es beispielsweise wie ein herkömmlicher Mauerstein als erste Steinschicht der tragenden Außenwand oberhalb der Kellerdecke eingesetzt wird.

Aus der Schrift EP 2 405 065 ist ein druckkraftübertragendes und isolierendes Anschlusselement bekannt, welches zur vertikalen, lastabtragenden Verbindung von aus Beton zu erstellenden Gebäudeteilen zum Einsatz kommt. Es besteht aus einem Isolationskörper mit einem oder mehreren darin eingebetteten Druckelementen. Durch die Druckelemente verlaufen Querkraftbewehrungselemente, die sich zum Anschluss an die aus Beton zu erstellenden Gebäudeteile im Wesentlichen vertikal über die Oberseite und die Unterseite des Isolationskörpers hinaus erstrecken. Der Isolationskörper kann beispielsweise aus Schaumglas oder expandiertem Polystyrol-Hartschaum und die Druckelemente aus Beton, Faserbeton oder Faserkunststoff hergestellt werden.

Aus der CN 105 507 481 A ist ein wärmedämmender Mauerstein aus Leichtbeton mit trapezförmiger Grundfläche bekannt, der zur Herstellung von gemauerten Gebäudeteilen in abwechselnd gegensinniger Orientierung seiner kurzen und langen Trapezseiten verbaut wird.

DE 20 2004 020 656 U1 offenbart ein Verfahren zum Erstellen tragender Gebäudeteile aus Beton, nämlich einer vertikalen Gebäudewand zum Anschluss an eine darüberliegende Geschossdecke.

Eine Aufgabe der Erfindung besteht darin, ein Wärmedämmelement anzugeben, welches für den Einsatz zur Wärmeentkopplung zwischen einer Gebäudewand und einer darüber- oder darunterliegenden Geschossdecke besser geeignet ist sowie ein Herstellverfahren für eine Gebäudewand, die zum Anschluss an eine darüberliegende Geschossdecke mit derartigen Wärmedämmelementen ausgestattet ist.

Die Aufgabe wird hinsichtlich des Wärmedämmelements gelöst durch die Merkmale des Anspruchs 2 und hinsichtlich des Verfahrens durch die Merkmale des Anspruchs 9. Anspruch 1 gibt die erfindungsgemäße Verwendung eines Wärmedämmelements an. Vorteilhafte Ausgestaltungen sind den abhängigen Ansprüchen zu entnehmen.

Wärmedämmelemente der eingangs genannten Art werden erfindungsgemäß verwendet, indem diese linienförmig zwischen den Gebäudeteilen verlegt werden, derart, dass jeweils eine obere und eine untere Auflagefläche einen vertikalen Anschluss an die Gebäudeteile bilden. Die Wärmedämmelemente weisen jeweils einen Grundkörper mit zwei gegenüberliegenden kurzen Stirnseiten auf, die zur Anlage an benachbarte Wärmedämmelemente bei linienförmiger Verlegung ausgebildet sind, indem sie einen von der bezüglich der Auflageflächen Senkrechten abweichende Formgebung aufweisen.

Die Erfindung basiert auf dem Grundgedanken einer linienförmigen Verlegung der Wärmedämmelemente im Verbund, d.h. die Wärmedämmelemente werden jeweils mit ihrer kurzen Stirnseite Stoß an Stoß verlegt, ohne dass zwischen diesen ein Zwischenraum verbliebe. Die Kraftübertragung zwischen Gebäudewand und Geschossdecke verteilt sich daher statt auf einzelne Auflagepunkte linienförmig über die ganze Länge der Gebäudewand. Der Grundkörper der Wärmedämmelemente ist hierbei mit Ausnahme der genannten Stirnflächen vorzugsweise im Wesentlichen quaderförmig ausgebildet, wobei dessen Längsachse die Verlegerichtung vorgibt.

Nach Untersuchungen der Erfinder treten aufgrund der temperaturbedingt unterschiedlichen Wärmeausdehnung der angrenzenden Gebäudeteile längs der Gebäudewand gerichtete Kraftkomponenten auf, die durch entgegengesetzt gerichtete Kräfte am Übergang zur Geschossdecke kompensiert werden müssen. Diese Kräfte bewirken ein gewisses Drehmoment auf die Wärmedämmelemente, welches bei der genannten Stoß-an-Stoß Verlegung im Verbund über die angrenzenden Wärmedämmelemente aufgenommen wird. Durch die von der Senkrechten abweichende Formgebund der aneinander liegenden Stirnflächen wird hierbei ein verbesserter Verbund erzielt. Außerdem stützen sich die Wärmedämmelemente bei linienförmiger Verlegung in der Schalung für ein zu erstellendes Gebäudeteil gegenseitig in vertikaler Richtung ab und ermöglichen so eine einfache Montage.

Das Wärmedämmelement besteht erfindungsgemäß zumindest teilweise aus Leichtbeton als einem druckkraftübertragenden und wärmedämmenden Werkstoff. Unter Leichtbeton ist nach dem geltenden Regelwerk ein Beton mit einer trockenen Rohdichte von maximal 2000 kg/m³ - typischerweise etwa 1600 kg/m³ - definiert. Die geringe Dichte im Vergleich zu Normalbeton wird durch entsprechende Herstellverfahren und unterschiedliche Leichtbetonkörnungen, vorzugsweise Körnungen mit Kornporosität wie etwa Blähton erreicht. Leichtbeton in der hier zum Einsatz kommenden Zusammensetzung besitzt im trockenen Zustand eine Wärmeleitfähigkeit zwischen etwa 0,4 und 0,6 W/(m . K). Die Wärmeleitfähigkeit λ_{10,tr} wird üblicherweise bei 10° Mitteltemperatur und nach Trocknung bis zur Gewichtskonstanz gemessen.

Aus Leichtbeton lassen sich hochdruckfeste Formelemente mit niedriger spezifischer Wärmeleitfähigkeit herstellen. Je nach statischer Anforderung kann ein solches Leichtbetonteil zusätzlich Hohlkammern oder eingeschlossene, nichtlasttragende Isolierkörper umfassen. Die Höhe des Wärmedämmelements entspricht vorzugsweise in etwa der Stärke einer typischen Wärmedämmschicht, also etwa 5 bis 20 cm, bevorzugt 10 bis 15 cm.

Durch den Einsatz eines massiven oder in Hohlblockbauweise gefertigten Wärmedämmelements aus Leichtbeton steht bei gleichem oder geringerem Wärmeverlust eine wesentlich größere Auflagefläche zur Verfügung, als dies bei der Verwendung von hochdruckfesten Druckelementen der Fall wäre. Zusätzliche druckkraftübertragende Elemente wie Drucklager bzw. Druckkörper aus Hochleistungsbeton oder dergleichen werden nicht benötigt und sind im Rahmen der Erfindung auch nicht erwünscht bzw. vorgesehen, da aufgrund der höheren Verformbarkeit bzw. niedrigeren Schubsteifigkeit von Leichtbeton die auflastenden Kräfte anderenfalls nicht über den Leichtbeton-Grundkörper abgetragen werden könnten.

Der typische E-Modul von Normalbeton, wie er für eine Gebäudewand verwendet wird, beträgt etwa E_{cm}≈30.000 bis 40.000 N/mm². Der E-Modul des im Rahmen der Erfindung eigesetzten Leichtbetons beträgt dem gegenüber zwischen etwa 6.000 und 22.000 N/mm², vorzugsweise zwischen 8.000 und 16.000 N/mm², höchstvorzugsweise etwa 14.000 N/mm². Aufgrund ihrer gegenüber den angrenzenden Gebäudeteilen niedrigeren Schubsteifigkeit können die Wärmedämmelemente die aufgrund des abrupten Temperatursprungs an der Wärmedämmzone auftretenden größeren Unterschiede im Wärmeausdehnungsverhalten besser kompensieren. Der von den Wärmedämmelementen gebildete Übergangsbereich zwischen Gebäudewand und Geschossdecke wirkt also nicht nur in bauphysikalischer Hinsicht als Wärmedämmzone und in statischer Hinsicht als lastabtragendes Bauteil, sondern darüber hinaus auch noch als Spannungs-Dämpfungselement zum Ausgleich unterschiedlicher thermischer Ausdehnung.

Bei einer bevorzugten Ausführungsgestaltung sind bei einem erfindungsgemä-ßen Wärmedämmelement mehrere den Grundkörper durchdringende und sich im Wesentlichen vertikal über die obere und die untere Auflagefläche hinaus erstreckende, stabförmige Bewehrungsmittel, insbesondere Bewehrungsstäbe vorgesehen. Diese ermöglichen eine monolithische Anbindung der Gebäudeteile vor allem in Querkraftrichtung. Die Bewehrungsmittel sind hierbei fest in dem Grundkörper des Wärmedämmelements verankert. Außerdem weist das Wärmedämmelemente einen Grundkörper mit zwei gegenüberliegenden kurzen Stirnseiten auf, die zur Anlage an benachbarte Wärmedämmelemente bei linienförmiger Verlegung ausgebildet sind, indem sie einen von der bezüglich der Auflageflächen Senkrechten abweichende Formgebung aufweisen.

Die Wärmedämmelemente sind dazu vorgesehen, bei der Erstellung der darüber- und darunterliegenden Gebäudeteile aus Ortbeton mit angeschlossen zu werden. Hierzu werden die Wärmedämmelemente vor dem Betonieren in eine für das jeweilige Gebäudeteil erstellte Schalung eingesetzt. Insbesondere bezüglich des darunterliegenden Gebäudeteils ergibt sich dabei die Schwierigkeit, dass dieses von unten gegen die in die Schalung eingesetzte Lage aus Wärmedämmelementen betoniert werden muss. Dies soll erfindungsgemäß geschehen, indem zwischen einzelnen Wärmedämmelementen Lücken geschaffen werden, durch die Frischbeton eingefüllt und anschließend ein Verdichtungsgerät bzw. Rüttelwerkzeug eingeführt werden kann, um den Frischbeton zu verdichten. Danach werden die Lücken durch weitere Formteile bzw. Dämmelemente verschlossen. Vorzugsweise handelt es sich dabei ebenfalls um artgleiche Wärmedämmelemente.

In diesem Zusammenhang ist insbesondere vorgesehen, dass sich der Grundkörper der Wärmedämmelemente an seinen kurzen Stirnseiten von einer zur anderen Auflagefläche stetig oder in Stufenform verjüngt. Somit besteht zwischen je zwei sich nach oben hin verjüngenden Grundkörpern eine Lücke, in die ein entsprechend komplementäres Formteil eingesetzt werden und zur Lückenbildung wieder entnommen werden kann. Somit können als Einfüllöffnung und zum Verdichten des Frischbetons Lücken im ansonsten linienförmig geschlossenen Verbund der Wärmedämmelemente geschaffen werden. Im Anschluss kann in die sich nach oben hin erweiternde Lücke wieder das entsprechend komplementäre Formteil eingesetzt werden, um die Lücke zu verschließen, bevor das darüberliegende Gebäudeteil erstellt wird.

Bei einer besonders bevorzugten Ausführungsform sind die Stirnflächen derart ausgebildet, dass sie sich bei Spiegelung an einer zu den Auflageflächen parallelen Mittelebene gegenseitig ergänzen. Dies ermöglicht, die Wärmedämmelemente abwechselnd um jeweils 180° gedreht zu verlegen, so dass deren gegenseitig in Anlage kommende Stirnflächen sich stets gegeneinander ergänzen. Es können somit gleichartige Formteile für alle im Linienverbund aufeinanderfolgenden Wärmedämmelemente verwendet werden. Dennoch kann jedes zweite Formteil, bei dem die kürzere Auflagefläche nach unten orientiert ist, zur Lückenbildung entnommen werden.

Vorzugsweise hat der Grundkörper die Form eines Prismas mit parallelen Auflageflächen sowie planparallelen Seitenflächen in Trapezform. Die Prismenform mit einem - vorzugsweise gleichschenkeligen - Trapez als Grundfläche (bzw. hier die Seitenflächen) hat den Vorteil, dass einerseits jedes zweite Wärmedämmelement entnommen und wieder in den Linienverbund eingesetzt werden kann, anderseits, dass sich etwaige verbleibende Zwischenräume zwischen angrenzenden Wärmedämmelementen selbsttätig schließen, indem ein nachträglich eingesetztes Element ein wenig tiefer oder höher in Anlage kommt. Die sich dabei aufgrund von Verlegetoleranzen ergebenden Höhenunterschiede können beim Betonieren des angrenzenden Gebäudeteils problemlos ausgeglichen werden. Somit entsteht ungeachtet etwaiger Einbautoleranzen stets ein dichter Linienverbund zwischen den Wärmedämmelementen. Der Neigungswinkel der Stirnflächen gegen die Senkrechte liegt vorzugsweise in einem Bereich zwischen 3° und 20°, vorzugsweise zwischen 5° und 10°.

Mit Ausnahme seiner kurzen Stirnflächen ist der Grundkörper bevorzugt im Wesentlichen quaderförmig ausgebildet, wobei die Längsachse des Grundkörpers die Verlegerichtung vorgibt. Dies ermöglicht eine besonders einfache Verlegung der Wärmedämmelemente.

Außerdem kann im Rahmen der Erfindung vorgesehen sein, dass die stabförmigen Bewehrungsmittel aus einem Faserverbundwerkstoff bestehen. Während bei herkömmlichen vertikal angeordneten Stahlbetonbauteilen mit einem Bewehrungsgehalt von 3-4 % die Stahlbewehrung etwa die Hälfte zur Gesamtwärmeleitfähigkeit des Gebäudeteils beiträgt, wird durch die Kombination aus Leichtbeton mit einer Bewehrung aus einem Faserverbundwerkstoff im Bereich des Wärmedämmelements der Wärmeübertrag um ca. 90% gesenkt.

Im Rahmen einer Weiterbildung der Erfindung können auf zwei gegenüberliegenden Flächen Markierungen angebracht sein, welche sich bei linienförmiger Verlegung mit anderen Wärmedämmelementen zu einem vorgegebenen Muster ergänzen. Anhand dieses Musters kann nachträglich geprüft werden, ob die Wärmedämmelemente in der richtigen Orientierung und Positionierung zu einander verlegt wurden, so dass am fertigen Gebäude eine Qualitätskontrolle durchführbar ist.

Die vorliegende Erfindung betrifft außerdem ein Verfahren zum Erstellen tragender Gebäudeteile aus Beton, nämlich einer vertikalen Gebäudewand zum Anschluss an eine darüberliegende Geschossdecke. Zwischen den Gebäudeteilen wird hierbei linienförmig eine Mehrzahl von Wärmedämmelementen verlegt, die jeweils einen Grundkörper aufweisen, der zumindest teilweise aus Leichtbeton als einem druckkraftübertragenden und wärmedämmenden Werkstoff besteht und eine obere und eine untere Auflagefläche zum vertikalen Anschluss an die Gebäudeteile aufweist. Die Verlegung der Wärmedämmelemente erfolgt im Verbund, d.h. die Wärmedämmelemente werden jeweils mit ihrer kurzen Stirnseite Stoß an Stoß ohne Zwischenraum verlegt. Die Kraftübertragung zwischen Gebäudewand und Geschossdecke verteilt sich daher statt auf einzelne Auflagepunkte linienförmig über die ganze Länge der Gebäudewand.

Das Verfahren umfasst dabei die Schritte:
- Erstellen einer Armierung für die aus Beton zu erstellende Gebäudewand sowie eine um die Armierung angeordnete Schalung,
- Einsetzen der Wärmedämmelemente in die Schalung, so dass diese in einer Linie einen oberen Abschluss für die zu erstellende Gebäudewand bilden, wobei das Einsetzen der Wärmedämmelemente unter Lückenbildung erfolgt oder einzelne Wärmedämmelemente zwecks Lückenbildung aus der Schalung wieder herausgenommen werden,
- Einfüllen von Frischbeton in die Schalung durch die zwischen den Wärmedämmelementen gebildeten Lücken bis zur Höhe der unteren Auflagefläche der in der Schalung befindlichen Wärmedämmelemente sowie gegebenenfalls Verdichten des Frischbetons mittels eines durch die Lücken geführten Verdichtungsgeräts und
- Verschließen der Lücken durch Einsetzen weiterer Wärmedämmelemente.

Die zwei gegenüberliegende kurze Stirnseiten der Wärmedämmelemente sind hierbei zur Anlage an benachbarte Wärmedämmelemente ausgebildet, indem sie einen von der zu den Auflageflächen Senkrechten abweichende Formgebung aufweisen. Die in die Lücken eingesetzten weiteren Wärmedämmelemente stützen sich somit an den Stirnflächen der benachbarten Wärmedämmelemente in vertikaler Richtung ab.

Ein besonderer Vorteil ergibt sich, wenn die Wärmedämmelemente gleichartig sind und deren Stirnflächen derart ausgebildet sind, dass sie sich bei Spiegelung an einer zu den Auflageflächen parallelen Mittelebene gegenseitig ergänzen und bei dem die Wärmedämmelemente abwechselnd spiegelverkehrt zu einander verlegt werden. Wird nur jedes zweite Wärmedämmelement an der Schalung mit Hilfsmitteln befestigt, so können die dazwischen befindlichen nach oben entnommen und wieder eingesetzt werden, wobei sie einen Endanschlag nach unten an den sich ergänzenden Stirnflächen der benachbarten Wärmedämmelemente finden.

Weitere Merkmale, Vorteile und Eigenschaften der vorliegenden Erfindung werden im Folgenden anhand der Figuren und anhand von Ausführungsbeispielen erläutert. Dabei zeigt:
- Fig. 1: eine isometrische Ansicht eines erfindungsgemäßen Wärmedämmelements,
- Fig. 2: eine Seitenansicht des Wärmedämmelements aus Fig. 1,
- Fig. 3: eine Draufsicht auf das Wärmedämmelement aus Fig. 1,
- Fig. 4: ein erstes Ausführungsbeispiel für einen wärmedämmenden Anschluss zwischen einer aus Beton erstellten, tragenden Gebäudewand und einer darüberliegenden, betonierten Geschossdecke, und
- Fig. 5: ein zweites Ausführungsbeispiel für einen wärmedämmenden Anschluss zwischen einer aus Beton erstellten Gebäudewand und einer darunterliegenden, betonierten Geschossdecke.

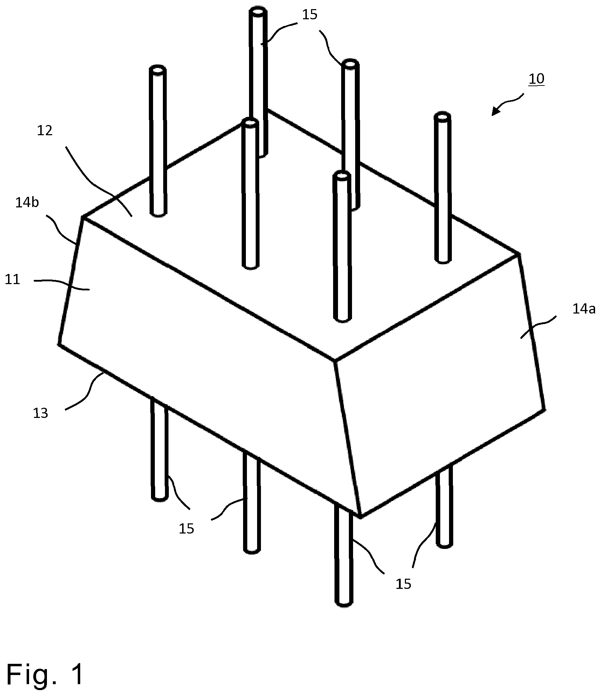

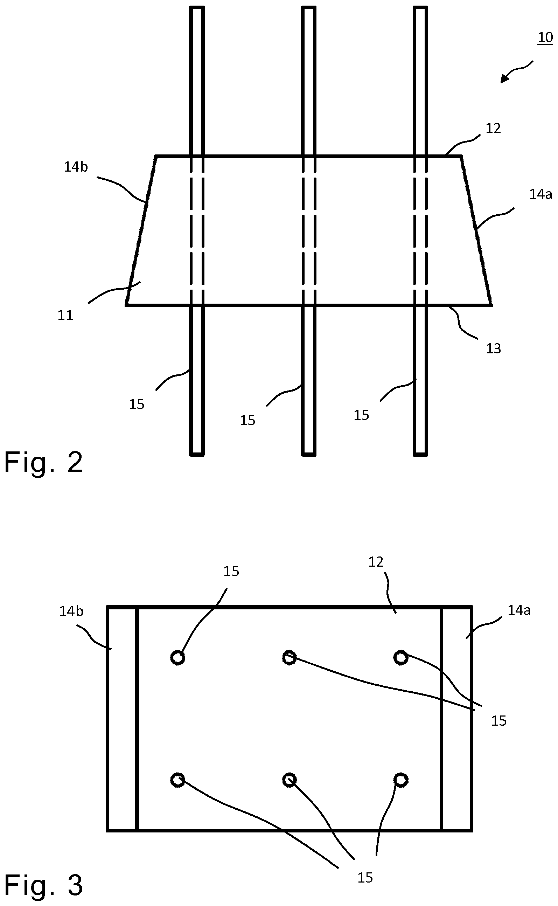

In den Figuren 1 bis 3 ist ein Wärmedämmelement 10 mit einem als Leichtbeton-Formteil ausgeführten Grundkörper 11 gezeigt. Es dient zum monolithischen Anschluss und zur lastabtragenden Verbindung einer Gebäudewand 21, beispielsweise im Untergeschoss eines Gebäudes, an die darüber liegende Kellerdecke 22. Möglich ist auch, das Wärmedämmelement 10 zur Wärmedämmung zwischen einer "kalten" Geschossdecke und einer darüber befindlichen Gebäudewand einzusetzen.

Das Wärmedämmelement 10 umfasst einen im Wesentlichen prismenförmigen Grundkörper 11 mit einer Oberseite 12 und einer Unterseite 13, die jeweils als Auflageflächen für die Kellerdecke bzw. den Abschluss der diese tragenden Gebäudewand 21 dienen. Durch den Grundkörper 11 ragen in zwei Reihen angeordnet insgesamt sechs Bewehrungsstäbe 15.

Die Seitenflächen des Grundkörpers 11 haben die Form eines gleichschenkeligen Trapezes. Somit sind die kurzen Stirnflächen 14a, 14b um einen Winkel geneigt, so dass sich der Grundkörper 11 von einer Anlagefläche 13 zur anderen 12 verjüngt. Die Wärmedämmelemente können somit alternierend um jeweils 180° um Ihre Längsachse gedreht zu einem Linienverbund zusammengefügt werden.

Der Grundkörper 11 des Wärmedämmelements 10 besteht aus einem Leichtbeton, welcher einerseits eine hohe Druckstabilität, andererseits eine gute Wärmedämmeigenschaft aufweist. Gegenüber Beton mit einer Wärmeleitfähigkeit von etwa 1,6 W/(m · K) liegt die Wärmeleitfähigkeit bei Verwendung eines geeigneten Leichtbetonwerkstoffs im Bereich von etwa 0,4-0,6 W/(m · K), was einer Verbesserung um etwa 70 % entspricht. Der verwendete Leichtbeton besteht im Wesentlichen aus Blähton oder Blähglas, Feinsanden, vorzugsweise Leichtsand, Fließmitteln sowie Stabilisatoren, die ein Entmischen durch Aufschwimmen der Körnung verhindern und die Verarbeitbarkeit verbessern. Die Druckfestigkeit des Wärmedämmelements ist dabei ausreichend hoch gewählt, um die statisch geplante Ausnutzung der darunterliegenden Gebäudewand 21 aus Ortbeton zu ermöglichen, beispielsweise entsprechend der Druckfestigkeitsklasse C25/30.

Die Bewehrungsstäbe 15, die den Grundkörper 11 des Wärmedämmelements 10 in vertikaler Richtung durchqueren, dienen als Querkraftbewehrung zur Übertragung längs der Gebäudewand 21 sowie senkrecht zu dieser auftretender Querkräfte. Die Bewehrungsstäbe 15 werden bei der Herstellung des Wärmedämmelements 10 in den Leichtbetonwerkstoff des Grundkörpers 11 einbetoniert.

Die Bewehrungsstäbe 15 selbst sind im Ausführungsbeispiel aus einem Faserverbundwerkstoff, der aus in Kraftrichtung ausgerichteten Glasfasern und einer Kunstharz-Matrix besteht. Ein solcher Glasfaserbewehrungsstab weist eine extrem niedrige Wärmeleitfähigkeit auf, die bis zu 70-mal geringer ist als bei Betonstahl, und ist somit ideal für die Anwendung in dem Wärmedämmelement 10 geeignet. Alternativ ist jedoch auch der Einsatz von Bewehrungsstäben aus nichtrostendem Stahl möglich und im Rahmen der vorliegenden Erfindung mit umfasst.

Der Grundkörper 11 des Wärmedämmelements 10 hat im Ausführungsbeispiel, ohne dass die Erfindung hierauf beschränkt wäre, eine Länge von etwa 210 mm, gemessen entlang der Mittelachse. Die Höhe ohne Rippen beträgt 100 mm und entspricht somit der üblichen Stärke einer nachträglich angebrachten Wärmedämmschicht. Die Breite des Grundkörpers entspricht der geplanten Wandstärke der Gebäudewand, also z.B. 180 mm. Der Neigungswinkel der Stirnseiten beträgt etwa 10°.

Während die Seitenflächen als mit der späteren Gebäudewand fluchtende Flächen planparallel ausgeführt sind, können die Auflageflächen 12, 13 zusätzlich eine Profilierung (nicht gezeigt) beispielsweise in Form von Rippen, Noppen oder dergleichen aufweisen. Diese können für eine Verzahnung mit den anschließenden Gebäudeteilen, also der Gebäudewand 21 und der Geschossdecke 22 sorgen und tragen Querkräfte aufgrund unterschiedlicher Wärmeausdehnung an die angrenzenden Gebäudeteile ab.

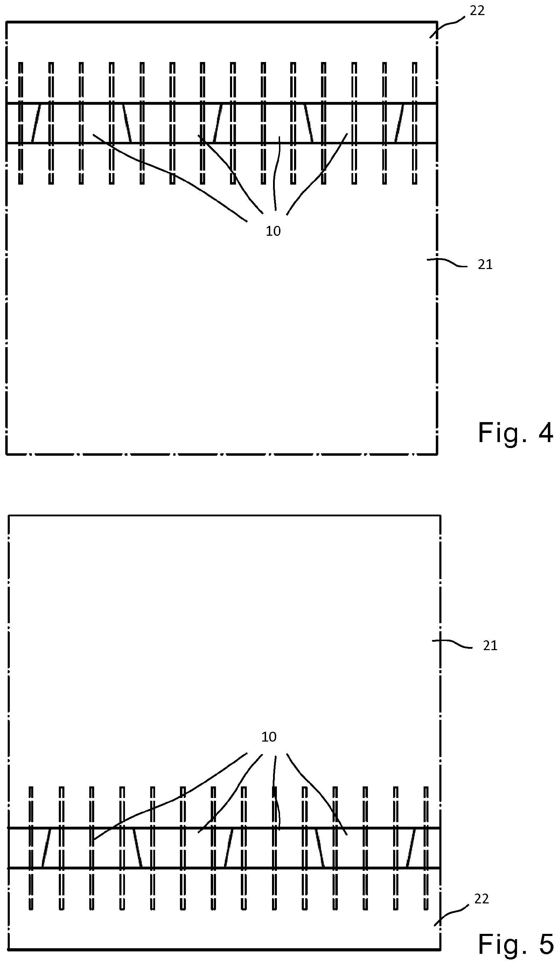

In Figur 4 ist eine Anschlusssituation zwischen einer Gebäudewand 21, z.B. im Untergeschoss eines Gebäudes, und der darüber liegenden Geschossdecke 22, z.B. der Kellerdecke, gezeigt. Den obersten Abschluss der Gebäudewand 21 bildet eine linienförmig im Verbund, also ohne Zwischenraum, gesetzte Lage von Wärmedämmelementen 10. Deren Bewehrungsstäbe 15 sind in der aus Ortbeton erstellten Gebäudewand 21 einbetoniert. Die Gebäudewand 21 wurde dabei von unten bis an die Wärmedämmelemente 10 heran betoniert, indem durch Herausnehmen einzelner Wärmedämmelemente 10 Lücken geschaffen wurden, durch die Frischbeton in die betreffende Schalung eingefüllt und verdichtet werden kann.

Über der Lage von Wärmedämmelementen 15 befindet sich die ebenfalls aus Ortbeton erstellte Geschossdecke 22. Die über das Wärmedämmelement 10 hinausragenden Bewehrungsstäbe sind in die Geschossdecke 22 einbetoniert.

Zur Herstellung wird zunächst in an sich üblicher Weise eine Armierung für die Gebäudewand 21 erstellt und mit einer Schalung versehen. In die Schalung werden als oberster Abschluss die Wärmedämmelemente eingesetzt. Dabei sind die Wärmedämmelemente abwechselnd spiegelverkehrt zu einander, d.h. um 180° um die Längsrichtung verdreht verlegt, so dass sich die spiegelbildlich schrägen Stirnflächen gegenseitig ergänzen. Die mit der längeren Auflagefläche 13 nach unten weisenden Wärmedämmelemente 10 werden mit Hilfsmitteln an der Schalung befestigt; die jeweils umgekehrt verlegten Wärmedämmelemente 10 werden nur in die betreffenden Lücken eingelegt und können zur Lückenbildung herausgenommen und nach dem Betonieren wieder eingesetzt werden.

In die derart geschaffenen Lücken wird nun Frischbeton in die Schalung eingefüllt, so dass dieser bis an die Unterkante der Wärmedämmelemente 10 heranreicht. Anschließend kann ein Rüttler durch die Lücken eingeführt werden, um den Frischbeton zu verdichten. Nach dem Verdichten werden die zur Lückenbildung entnommenen Wärmedämmelemente wieder mit ihrer kurzen Auflagefläche 12 nach unten in den Linienverbund der Wärmedämmelemente eingesetzt.

Sobald der Beton abgebunden hat, kann in ebenfalls an sich bekannter Weise mit der Erstellung der Geschossdecke 22 weiterverfahren werden, wobei deren Armierung mit den über die obere Auflagefläche 13 der Wärmedämmelemente 10 hinausragenden Bewehrungsstäben 15 aus Faserverbundwerkstoff im Ortbeton der Geschossdecke 22 vergossen wird. Zum Erstellen der Geschossdecke 22 wird oberhalb der bzw. angrenzend an die Wärmedämmelemente 10 eine Schalung installiert und eine Bewehrung für die Geschossdecke 22 verlegt. Anschließend wird die Geschossdecke in an sich üblicher Weise betoniert. Unterhalb der Geschossdecke 22 kann abschließend eine Wärmedämmschicht aus einem hochdämmenden Werkstoff angebracht werden, deren Stärke im Wesentlichen zumindest der Höhe der Wärmedämmelemente 10 entspricht. Als Wärmedämmschicht können beispielsweise Mineraldämmplatten oder Holzwolle-Mehrschichtplatten verbaut werden.

Bei einem alternativen, in Figur 5 gezeigten Ausführungsbeispiel werden die Wärmedämmelemente 10 als unterste Lage zwischen einer Gebäudewand 21 und einer darunterliegenden Geschossdecke 22 oder Bodenplatte - welche im verallgemeinerten Sinne im Rahmen der vorliegenden Erfindung ebenfalls als Geschossdecke bezeichnet wird - angeordnet. Diese Ausführungsform kommt zum Einsatz bei einer "kalten" Geschossdecke, bei der eine Wärmedämmschicht oberhalb der Geschossdecke verbaut und typischerweise mit einem schwimmenden Estrich kombiniert wird.

Zur Herstellung wird zunächst eine Schalung nebst Bewehrung für die untere Geschossdecke 22 erstellt. Am oberen Rand der Schalung oder in entsprechender Höhe an der Bewehrung werden die Wärmedämmelemente 10 befestigt. Anschließend wird in an sich üblicher Weise die Geschossdecke 22 aus Frischbeton gegossen und verdichtet. Dabei werden die nach unten weisenden Bewehrungsstäbe 15 der Wärmedämmelemente 10 mit einbetoniert. Nach dem Abbinden bzw. Aushärten des Betons wird oberhalb der Wärmedämmelemente 10 eine Bewehrung für die Gebäudewand 21 erstellt und um diese und unter Einschluss der aus der betonierten Geschossdecke 22 ragenden Wärmedämmelemente 10 eine Schalung für die Gebäudewand 21 aufgestellt. Anschließend wird die Gebäudewand 21 in herkömmlicher Weise betoniert.

## Patentansprüche

1. Verwendung von Wärmedämmelementen zur Wärmeentkopplung zwischen aus Beton zu erstellenden, tragenden Gebäudeteilen, nämlich einer vertikalen Gebäudewand (21) und einer darüber- oder darunterliegenden Geschossdecke (22), wobei die Wärmedämmelements (10) jeweils einen Grundkörper (11) aufweisen, der zumindest teilweise aus einem druckkraftübertragenden und wärmedämmenden Werkstoff, nämlich Leichtbeton, besteht und mit diesem linienförmig zwischen den Gebäudeteilen verlegt werden, derart, dass jeweils eine obere und eine untere Auflagefläche (12, 13) einen vertikalen Anschluss an die Gebäudeteile (21, 22) bilden, **dadurch gekennzeichnet, dass**
zwei gegenüberliegende kurze Stirnseiten (14a, 14b) des jeweiligen Grundkörpers (11) zur Anlage an benachbarte Wärmedämmelemente (10) bei linienförmiger Verlegung ausgebildet sind, indem sie eine von der bezüglich der Auflageflächen (12, 13) Senkrechten abweichende Formgebung aufweisen.

2. Wärmedämmelement zur Wärmeentkopplung zwischen aus Beton zu erstellenden, tragenden Gebäudeteilen, nämlich einer vertikalen Gebäudewand (21) und einer darüber- oder darunterliegenden Geschossdecke (22), wobei das Wärmedämmelement (10) einen linienförmig zwischen den Gebäudeteilen zu verlegenden Grundkörper (11) aufweist, der zumindest teilweise aus einem druckkraftübertragenden und wärmedämmenden Werkstoff, nämlich Leichtbeton, besteht und eine obere und eine untere Auflagefläche (12, 13) zum vertikalen Anschluss an die Gebäudeteile (21, 22) aufweist, wobei zwei gegenüberliegende kurze Stirnseiten (14a, 14b) des Grundkörpers (11) zur Anlage an benachbarte Wärmedämmelemente (10) bei linienförmiger Verlegung ausgebildet sind, indem sie eine von der bezüglich der Auflageflächen (12, 13) Senkrechten abweichende Formgebung aufweisen,
**dadurch gekennzeichnet, dass**
das Wärmedämmelement mehrere den Grundkörper (11) durchdringende und sich im Wesentlichen vertikal über die obere und die untere Auflagefläche (12, 13) hinaus erstreckende, stabförmige Bewehrungsmittel, insbesondere Bewehrungsstäbe (15) aufweist .

3. Wärmedämmelement nach Anspruch 2, wobei der Grundkörper (11) sich an seinen kurzen Stirnseiten (14a, 14b) von einer zur anderen Auflagefläche stetig oder in Stufenform verjüngt.

4. Wärmedämmelement nach Anspruch 2 oder 3, wobei die Stirnflächen (14a, 14b) derart ausgebildet sind, dass sie sich bei Spiegelung an einer zu den Auflageflächen (12, 13) parallelen Mittelebene gegenseitig ergänzen.

5. Wärmedämmelement nach einem der Ansprüche 2 bis 4, wobei der Grundkörper (11) die Form eines Prismas mit parallelen Auflageflächen (12, 13) sowie planparallelen Seitenflächen in Trapezform aufweist.

6. Wärmedämmelement nach einem der Ansprüche 2 bis 5, wobei der Grundkörper (11) mit Ausnahme der kurzen Stirnflächen (14a, 14b) im Wesentlichen quaderförmig ausgebildet ist und die Längsachse des Grundkörpers (11) die Verlegerichtung vorgibt.

7. Wärmedämmelement nach einem der Ansprüche 2 bis 6, bei dem die stabförmigen Bewehrungsmittel (15) aus einem Faserverbundwerkstoff bestehen.

8. Wärmedämmelement nach einem der Ansprüche 2 bis 7, bei dem auf zwei gegenüberliegenden Flächen Markierungen angebracht sind, welche sich bei linienförmiger Verlegung mit anderen Wärmedämmelementen zu einem vorgegebenen Muster ergänzen.

9. Verfahren zum Erstellen tragender Gebäudeteile aus Beton, nämlich einer vertikalen Gebäudewand (21) zum Anschluss an eine darüberliegende Geschossdecke (22), wobei zwischen den Gebäudeteilen (21, 22) linienförmig eine Mehrzahl von Wärmedämmelementen (10) verlegt werden, die jeweils einen Grundkörper (11) aufweisen, der zumindest teilweise aus einem drucckraftübertragenden und wärmedämmenden Werkstoff, nämlich Leichtbeton, besteht und eine obere und eine untere Auflagefläche (12, 13) zum vertikalen Anschluss an die Gebäudeteile (21, 22) aufweist, mit den Schritten:
- Erstellen einer Bewehrung für die aus Beton zu erstellende Gebäudewand (21) sowie eine um die Bewehrung angeordnete Schalung,
- Einsetzen der Wärmedämmelemente (10) in die Schalung, so dass diese in einer Linie einen oberen Abschluss für die zu erstellende Gebäudewand (21) bilden, wobei das Einsetzen der Wärmedämmelemente (10) unter Lückenbildung erfolgt oder einzelne Wärmedämmelemente (10) zwecks Lückenbildung aus der Schalung wieder herausgenommen werden,
- Einfüllen von Frischbeton in die Schalung durch die zwischen den Wärmedämmelementen (10) gebildeten Lücken bis zur Höhe der unteren Auflagefläche (12) der in der Schalung befindlichen Wärmedämmelemente (10) sowie gegebenenfalls Verdichten des Frischbetons mittels eines durch die Lücken geführten Verdichtungsgeräts und
- Verschließen der Lücken durch Einsetzen weiterer Wärmedämmelemente (10),
wobei zwei gegenüberliegende kurze Stirnseiten (14a, 14b) der Wärmedämmelemente (10) zur Anlage an benachbarte Wärmedämmelemente (10) ausgebildet sind, indem sie einen von der zu den Auflageflächen (12, 13) Senkrechten abweichende Formgebung aufweisen, wodurch die in die Lücken eingesetzten weiteren Wärmedämmelemente (10) sich an den Stirnflächen (14a, 14b) der benachbarten Wärmedämmelemente (10) in vertikaler Richtung abstützen.

10. Verfahren nach Anspruch 9, bei dem die Wärmedämmelemente (10) gleichartig sind und deren Stirnflächen (14a, 14b) derart ausgebildet sind, dass sie sich bei Spiegelung an einer zu den Auflageflächen (12, 13) parallelen Mittelebene gegenseitig ergänzen und bei dem die Wärmedämmelemente (10) abwechselnd spiegelverkehrt zu einander verlegt werden.

## Claims

1. Use of heat insulation elements for decoupling heat between load-bearing building parts to be constructed from concrete, namely a vertical building wall (21) and a floor ceiling (22) located above or below, wherein the heat insulation elements (10) each have a base body (11) which consists at least partly of a compressive force-transmitting and heat-insulating material, namely lightweight concrete, and are laid with this in a linear manner between the building parts such that an upper and a lower bearing surface (12, 13) each form a vertical connection to the building parts (21, 22), **characterised in that**
two opposing short end faces (14a, 14b) of the respective base body (11) are formed for abutment against adjacent heat insulation elements (10) when laid in a linear manner by having a shape which deviates from the perpendicular with respect to the bearing surfaces (12, 13).

2. A heat insulation element for decoupling heat between load-bearing building parts to be constructed from concrete, namely a vertical building wall (21) and a floor ceiling (22) located above or below, wherein the heat insulation element (10) has a base body (11) to be laid in a linear manner between the building parts, which consists at least partially of a compressive force-transmitting and heat-insulating material, namely lightweight concrete, and has an upper and a lower bearing surface (12, 13) for vertical connection to the building parts (21, 22), wherein two opposite short end faces (14a, 14b) of the base body (11) are formed for abutment against adjacent heat insulation elements (10) when laid in a linear manner by having a shape which deviates from the perpendicular with respect to the bearing surfaces (12, 13),
**characterised in that**
the heat insulation element has multiple rod-shaped reinforcing means, in particular reinforcing rods (15), penetrating the base body (11) and extending substantially vertically beyond the upper and lower bearing surfaces (12, 13).

3. The heat insulation element according to claim 2, wherein the base body (11) tapers continuously or in steps from one bearing surface to the other at its short end faces (14a, 14b).

4. The heat insulation element according to claim 2 or 3, wherein the end faces (14a, 14b) are formed such that they complement each other upon mirroring at a centre plane parallel to the bearing surfaces (12, 13).

5. The heat insulation element according to any one of claims 2 to 4, wherein the base body (11) has the shape of a prism with parallel bearing surfaces (12, 13) and plane-parallel side surfaces in trapezoidal shape.

6. The heat insulation element according to any one of claims 2 to 5, wherein the base body (11), with the exception of the short end faces (14a, 14b), is formed substantially cuboid and the longitudinal axis of the base body (11) specifies the laying direction.

7. The heat insulation element according to any one of claims 2 to 6, in which the rod-shaped reinforcing means (15) consist of a fibre composite material.

8. The heat insulation element according to any one of claims 2 to 7, in which markings are applied to two opposing surfaces which, when laid in a linear manner with other heat insulation elements, complement each other to a specified pattern.

9. A method for constructing load-bearing building parts made of concrete, namely a vertical building wall (21) for connection to a floor ceiling (22) located above, wherein a plurality of heat insulation elements (10) is laid in a linear manner between the building parts (21, 22), which each have a base body (11) which consists at least partially of a compressive force-transmitting and heat-insulating material, namely lightweight concrete, and has an upper and a lower bearing surface (12, 13) for vertical connection to the building parts (21, 22), with the steps of:
- constructing a reinforcement for the building wall (21) to be constructed from concrete as well as formwork arranged around the reinforcement,
- inserting the heat insulation elements (10) into the formwork so that they form an upper closure in a line for the building wall (21) to be constructed, wherein the inserting of the heat insulation elements (10) takes place while forming gaps or individual heat insulation elements (10) are removed from the formwork again for the purpose of forming gaps,
- filling fresh concrete into the formwork through the gaps formed between the heat insulation elements (10) up to the height of the lower bearing surface (12) of the heat insulation elements (10) located in the formwork and, if necessary, compacting the fresh concrete by means of a compacting device guided through the gaps, and
- closing the gaps by inserting further heat insulation elements (10),
wherein two opposing short end faces (14a, 14b) of the heat insulation elements (10) are formed for abutment against adjacent heat insulation elements (10) by having a shape which deviates from the perpendicular to the bearing surfaces (12, 13), whereby the further heat insulation elements (10) inserted into the gaps are supported on the end faces (14a, 14b) of the adjacent heat insulation elements (10) in vertical direction.

10. The method according to claim 9, in which the heat insulation elements (10) are of the same type and their end faces (14a, 14b) are formed such that they complement one another upon mirroring at a centre plane parallel to the bearing surfaces (12, 13) and in which the heat insulation elements (10) are laid alternately mirror-inverted to one another.

## Revendications

1. Utilisation d'éléments d'isolation thermique pour le découplage thermique entre des parties de bâtiment porteuses à réaliser en béton, à savoir un mur de bâtiment vertical (21) et un plafond d'étage (22) situé au-dessus ou en dessous, dans laquelle les éléments d'isolation thermique (10) présentent respectivement un corps de base (11) qui est constitué au moins partiellement d'un matériau transmettant la force de pression et à isolation thermique, à savoir du béton léger, et qui est posé avec celui-ci de manière linéaire entre les parties de bâtiment, de sorte que respectivement une surface d'appui supérieure et inférieure (12, 13) forment un raccordement vertical aux parties de bâtiment (21, 22), **caractérisée en ce que**
deux faces frontales courtes opposées (14a, 14b) du corps de base respectif (11) sont conçues pour prendre appui sur des éléments d'isolation thermique adjacents(10) lorsqu'ils sont posés de manière linéaire, **en ce qu'**elles présentent une forme déviant de la verticale par rapport aux surfaces d'appui (12, 13).

2. Élément d'isolation thermique pour le découplage thermique entre des parties de bâtiment porteuses à réaliser en béton, à savoir un mur de bâtiment vertical (21) et un plafond d'étage (22) situé au-dessus ou en dessous, dans lequel l'élément d'isolation thermique (10) présente un corps de base (11) à poser de manière linéaire entre les parties de bâtiment qui est constitué au moins partiellement d'un matériau transmettant la force de pression et à isolation thermique, à savoir du béton léger, et présente une surface d'appui supérieure et inférieure (12, 13) pour le raccordement vertical aux parties de bâtiment (21, 22), dans lequel deux faces frontales courtes opposées (14a, 14b) du corps de base (11) sont conçues pour prendre appui sur des éléments d'isolation thermique adjacents (10) lorsqu'ils sont posés de manière linéaire, en ce qu'elles présentent une forme déviant de la verticale par rapport aux surfaces d'appui (12, 13),
**caractérisé en ce que**
l'élément d'isolation thermique présente plusieurs moyens d'armature en forme de barre, en particulier des barres d'armature (15) traversant le corps de base (11) et s'étendant sensiblement verticalement au-delà des surfaces d'appui supérieure et inférieure (12, 13).

3. Élément d'isolation thermique selon la revendication 2, dans lequel le corps de base (11) s'effile sur ses faces frontales courtes (14a, 14b) continuellement ou progressivement d'une surface d'appui à l'autre.

4. Élément d'isolation thermique selon la revendication 2 ou 3, dans lequel les faces frontales (14a, 14b) sont conçues de sorte qu'elles se complètent mutuellement lorsqu'elles sont réfléchies sur un plan médian parallèle aux surfaces d'appui (12, 13).

5. Élément d'isolation thermique selon l'une quelconque des revendications 2 à 4, dans lequel le corps de base (11) présente la forme d'un prisme avec des surfaces d'appui parallèles (12, 13) ainsi que des surfaces latérales à plans parallèles de forme trapézoïdale.

6. Élément d'isolation thermique selon l'une quelconque des revendications 2 à 5, dans lequel le corps de base (11) est sensiblement de forme parallélépipédique, à l'exception des surfaces frontales courtes (14a, 14b), et l'axe longitudinal du corps de base (11) définit la direction de pose.

7. Élément d'isolation thermique selon l'une quelconque des revendications 2 à 6, dans lequel les moyens d'armature (15) en forme de barre sont constitués d'un matériau composite de fibres.

8. Élément d'isolation thermique selon l'une quelconque des revendications 2 à 7, dans lequel des marques sont placées sur deux surfaces opposées qui se complètent pour former un motif prédéterminé lorsqu'elles sont posées de manière linéaire avec d'autres éléments d'isolation thermique.

9. Procédé pour réaliser des parties de bâtiment porteuses en béton, à savoir un mur de bâtiment vertical (21) pour le raccordement à un plafond d'étage (22) situé au-dessus, dans lequel une pluralité d'éléments d'isolation thermique (10) sont posés de manière linéaire entre les parties de bâtiment (21, 22), éléments qui présentent respectivement un corps de base (11) qui est constitué au moins partiellement d'un matériau transmettant la force de pression et à isolation thermique, à savoir du béton léger, et qui présente une surface d'appui supérieure et inférieure (12, 13) pour le raccordement vertical aux parties de bâtiment (21, 22), avec les étapes consistant à :
- réaliser une armature pour le mur de bâtiment (21) à réaliser en béton ainsi qu'un coffrage disposé autour de l'armature,
- insérer des éléments d'isolation thermique (10) dans le coffrage, de sorte que ceux-ci forment sur une ligne une fermeture supérieure pour le mur de bâtiment (21) à réaliser, dans lequel l'insertion des éléments d'isolation thermique (10) s'effectue avec formation d'espaces ou des éléments d'isolation thermique (10) individuels sont à nouveau retirés du coffrage aux fins de la formation d'espaces,
- remplir le coffrage de béton frais à travers les espaces formés entre les éléments d'isolation thermique (10) jusqu'à hauteur de la surface d'appui inférieure (12) des éléments d'isolation thermique (10) se trouvant dans le coffrage ainsi que, le cas échéant, compacter le béton frais au moyen d'un appareil de compactage guidé à travers les espaces et
- fermer les espaces en insérant des éléments d'isolation thermique (10) supplémentaires,
dans lequel deux faces frontales courtes opposées (14a, 14b) des éléments d'isolation thermique (10) sont conçues pour prendre appui sur des éléments d'isolation thermique adjacents (10), en ce qu'elles présentent une forme déviant de la verticale aux surfaces d'appui (12, 13), moyennant quoi les éléments d'isolation thermique supplémentaires (10) insérés dans les espaces s'appuient en direction verticale contre les faces frontales (14a, 14b) des éléments d'isolation thermique adjacents (10).

10. Procédé selon la revendication 9, dans lequel les éléments d'isolation thermique (10) sont de même type et leurs surfaces frontales (14a, 14b) sont conçues de sorte qu'elles se complètent mutuellement lorsqu'elles sont réfléchies sur un plan médian parallèle aux surfaces d'appui (12, 13) et dans lequel les éléments d'isolation thermique (10) sont posés à tour de rôle en image inversée les uns par rapport aux autres.
